# EUROPEAN PATENT APPLICATION

(11) **EP 1 223 714 A2**
(43) Date of publication of application: **17.07.2002**
(21) Application number: 01850229.4
(22) Date of filing: 27.12.2001
(51) Int. Cl.: H04L 12/56, H04L 29/06

(54) **Methods, systems and computer program products for bandwidth allocation based on throughput guarantees**

(30) Priority: 12.01.2001 US 759671
(71) Applicant: TELEFONAKTIEBOLAGET LM ERICSSON, 126 25 Stockholm (SE)
(72) Inventor: St John, James T., Goode, Virginia 24556 (US); Massaro, Vincent P., Lynchburg, Virginia 24504 (US)
(74) Representative: Stenborg, Anders Vilhelm

(57) **Abstract**

Methods, systems and computer program products are provided for controlling access to a shared communication medium utilizing a revolving priority queue. The revolving priority queue (RPQ) is divided into at least a low priority tier having a plurality of request queues and a high priority tier having a plurality of request queues. A request is directed into an initial queue in the high priority tier if throughput for an end user associated with the request fails to meet a guaranteed throughput. Furthermore, bandwidth may be allocated based on an order in which requests are read from the RPQ, where requests are read from the high priority tier before requests are read from the low priority tier of queues. Additional system embodiments are provided as well as embodiments which may be used for requests or for packet-based bandwidth allocation. Embodiments of the present invention are particularly suitable for use in multiple access broadband systems such as cable television systems.

## Description

### BACKGROUND OF THE INVENTION

The present invention relates to the field of communications in general and more particularly to bandwidth allocation for a shared communication channel.

With the rise in popularity of the Internet and other bi-directional communication services, new demands have been placed upon existing communications infrastructure to support the provision of such services. In light of the typical bandwidth limitations of the Public Switched Telephone Network (PSTN) commonly used for communications such as the Internet data communications, there have been efforts to provide these services over the Cable Television System (CATV) system. CATV typically provides a coaxial wired connection from a cable system service provider facility to end users. While CATV system has primarily been used to deliver downstream communications from the cable system service provider facility to the end users (such as cable television signals), it may also support upstream communications from end users to the CATV system provider. The downstream channel (side) is typically a one-to-many distribution network, the upstream channel is typically a many-to-one distribution network. As providing these services over the broadband cable network becomes more popular, bandwidth constraints of even the broadband downstream channel of the CATV system may pose problems.

Furthermore, as the Internet has been used for different types of media, such as streaming audio and streaming video, different levels of service have been used. Generally these different types of service may be categorized based on Quality of Service (QoS) criteria, such as guaranteed bandwidth, packet loss or the like. However, with shared downstream and upstream channels, QoS in a CATV system may be difficult, especially, when the system is over subscribed.

One example of a CATV based system suitable for bi-directional communications, such as the Transmission Control Protocol/Internet Protocol (TCP/IP) of the Internet, is the Data Over Cable System Interface Specification (DOCSIS) published by Cable Television Laboratories Incorporated. In a DOCSIS system, the upstream channel is typically allocated based on requests from modems for upstream bandwidth. The bandwidth is allocated by the cable system and notified to the cable modems with a "map" which is broadcast to the cable modems on the downstream channel. The "map" specifies which sub-channels of the upstream channel will be available for a particular modems use, when they will be available and for how long the channels will be available. These sub-channels are typically mapped to a modem for a particular amount of data associated with the request.

Another aspect of DOCSIS is the ability to "provision" modems when a modem is connected to the system. This provisioning may include establishing a guaranteed or minimum throughput for the modem for upstream communications, downstream communications or both. However, given the shared nature of the communications medium in the CATV system, it may be difficult to assure such minimum throughputs as the number of modems in the system may vary as well as the communication requirements of each modem.

### SUMMARY OF THE INVENTION

Embodiments of the present invention provide methods systems and computer program products for controlling access to a shared communication medium utilizing a revolving priority queue. The revolving priority queue (RPQ) is divided into at least a low priority tier having a plurality of request queues and a high priority tier having a plurality of request queues. A request is directed into an initial queue in the high priority tier if throughput for an end user associated with the request fails to meet a guaranteed throughput. Furthermore, bandwidth may be allocated based on an order in which requests are read from the RPQ, where requests are read from the high priority tier before requests are read from the low priority tier.

In further embodiments of the present invention, bandwidth for a shared communication medium is allocated by dividing a revolving priority queue (RPQ) into at least a low priority tier having a plurality of queues and a high priority tier having a plurality of queues. Information indicating bandwidth requirements for a connection is queued in the high priority tier if a throughput guarantee associated with the connection is not met. Bandwidth is allocated based on an order in which the information indicating bandwidth requirements for a connection is read from the RPQ.

In still further embodiments of the present invention, a system for controlling access to a shared communication medium includes a bandwidth allocator circuit configured to receive requests for bandwidth of the shared communication medium and to allocate bandwidth of the shared communication medium based on the received requests. The bandwidth allocator circuit includes a first tier of revolving priority queues configured to store requests for bandwidth and a second tier of revolving priority queues configured to store requests for bandwidth. A request evaluator circuit is configured to direct requests to either the first tier of revolving priority queues or the second tier of revolving priority queues based on whether a throughput guarantee associated with a request is met.

Embodiments of the present invention may be provided in a broadband multiple access system.

### BRIEF DESCRIPTION OF THE DRAWINGS

**Figure 1** is a schematic block diagram of a cable system including a bandwidth allocator according to embodiments of the present invention;
**Figure 2** is a block diagram of the Cable Modem Terminal Server (CMTS) including a bandwidth allocator according to embodiments of the present invention;
**Figure 3** is a flow chart illustrating operations for bandwidth allocation according to embodiments of the present invention;
**Figure 4A** is a flow chart illustrating operations for assigning bandwidth requests to initial queues of a revolving priority queuing (RPQ) according to embodiments of the present invention;
**Figure 4B** is a flow chart illustrating operations for concatenation of queue contents according to embodiments of the present invention;
**Figure 4C** is a flow chart illustrating operations for promotion of queue contents from an initial queue to a secondary queue according to embodiments of the present invention;
**Figure 4D** is a flow chart illustrating operations for reading requests from a RPQ according to embodiments of the present invention; and
**Figure 5** is a flow chart illustrating operations for modification of a conventional RPQ allocation system to provide bandwidth allocation according to embodiments of the present invention.

### DETAILED DESCRIPTION

The present invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

As will be appreciated by one of skill in the art, the present invention may be embodied as a method, data processing system, or computer program product. Accordingly, the present invention may take the form of an entirely hardware embodiment, an entirely software embodiment or an embodiment combining software and hardware aspects all generally referred to herein as a "circuit." Furthermore, the present invention may take the form of a computer program product on a computer-usable storage medium having computer-usable program code means embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

The present invention is described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart and/or block diagram block or blocks.

Embodiments of the present invention may provide for controlling access to a shared communication medium utilizing a revolving priority queue by dividing the revolving priority queue (RPQ) into at least a low priority tier having a plurality of request queues and a high priority tier having a plurality of request queues and directing a request into an initial queue in the high priority tier if throughput for an end user associated with the request fails to meet a guaranteed throughput. In particular embodiments, bandwidth may be allocated based on an order in which requests are read from the RPQ, where requests are read from the high priority tier before requests are read from the low priority tier.

In still further embodiments, a request is directed into an initial queue in the high priority tier if throughput for an end user associated with the request fails to meet a guaranteed throughput by receiving a request for access to the shared communication medium associated with a connection having a guaranteed throughput and determining if the connection associated with the request has met its guaranteed throughput. The request is placed in the first, high priority, tier of the RPQ if the connection associated with the request has not met its guaranteed throughput and in the second, low priority, tier of the RPQ if the connection associated with the request has met or exceeds its guaranteed throughput.

In still further embodiments, requests in the low priority tier may be promoted to a request queue in the high priority tier if, at a promotion time, the requests have not been read from a low priority tier request queue. In certain embodiments, a request associated with a connection which meets or exceeds its guaranteed throughput may be placed in a queue in the high priority tier only by promotion from a request queue in the low priority tier. Additionally, requests which do not have an associated guaranteed throughput may be placed into a request queue in the low priority tier.

In specific embodiments, the shared communication medium is a cable television system and requests for access are requests for access to an upstream channel of the cable television system. The cable television system may be a Data Over Cable System Interface Specification (DOCSIS) compatible system. In such systems, bandwidth may be allocated by generating a map allocating upstream bandwidth based on the read requests and broadcasting the map to cable modems on a downstream channel.

In still further embodiments of the present invention, bandwidth for a shared communication medium may be allocated by dividing a revolving priority queue (RPQ) into at least a low priority tier having a plurality of queues and a high priority tier having a plurality of queues and queuing information indicating bandwidth requirements for a connection in the high priority tier if a throughput guarantee associated with the connection is not met. Bandwidth is allocated based on an order in which the information indicating bandwidth requirements for a connection is read from the RPQ. The information indicating bandwidth requirements includes requests for bandwidth or event packets. In such embodiments, bandwidth may be allocated by reading packets or bandwidth requests from the RPQ and placing the read packets or granted bandwidth requests in an output queue in transmission order.

In additional embodiments of the present invention, access to a shared communication medium is controlled by a bandwidth allocator circuit configured to received requests for bandwidth of the shared communication medium and to allocate bandwidth of the shared communication medium based on the received requests. The bandwidth allocator circuit includes a first tier of revolving priority queues configured to store requests for bandwidth and a second tier of revolving priority queues configured to store requests for bandwidth. A request evaluator circuit is configured to direct requests to one of the first tier of revolving priority queues or the second tier of revolving priority queues based on whether a throughput guarantee associated with a request is met. In particular embodiments, the first tier of revolving priority queues may be a low priority tier of teh revolving priority queues and the secon tier of revolving priority queues may be a high priority tier of revolving priority queues.

In further embodiments, the first and second tier of revolving priority queues are operably coupled so that requests from the first tier of revolving priority queues are promoted to the second tier of revolving priority queues. Furthermore, the bandwidth allocator circuit may be further configured to read requests from the second tier of revolving priority queues and allocate bandwidth based on the order in which requests are read from the second tier of revolving priority queues and then read requests from the first tier of revolving priority queues if bandwidth remains to be allocated for a bandwidth allocation period. The bandwidth allocator circuit may also be configured to allocate bandwidth for requests in secondary queues of the second tier of revolving priority queues and then allocate bandwidth for requests in secondary queues of the first tier of revolving priority queues until all bandwidth for an allocation period has been allocated.

In certain embodiments, where N priority levels are associated with the requests, the first tier of revolving priority queues may include 2N queues and the second tier of revolving priority queues may include 2N queues. The first tier of revolving priority queues may have N initial queues and N secondary queues and the second tier of revolving priority queues may have N initial queues and N secondary queues. The initial queues and the secondary queues may be configured to promote requests from an initial queue to a corresponding secondary queue at a promotion time and concatenate requests in a secondary queue with requests in a corresponding initial queue at a concatenation time. In still further embodiments, a secondary queue of the first tier of revolving priority queues is operably associated with an initial queue of the second tier of revolving priority queues such that requests in the secondary queue are concatenated with requests in the primary queue at the concatenation time.

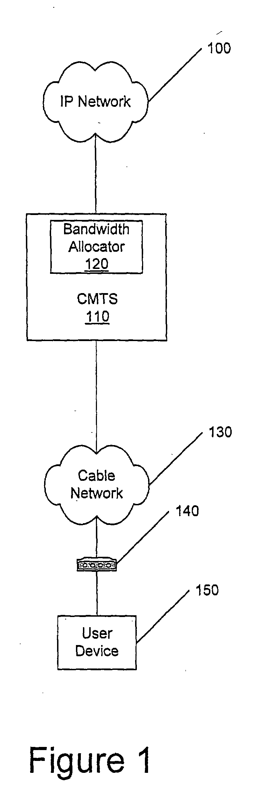

Embodiments of the present invention will now be described with reference to **Figure 1** which is a block diagram of an exemplary cable system including a bandwidth allocator **120** according to embodiments of the present invention. The exemplary cable network **130** illustrated in **Figure 1** may include cabling infrastructure such as coaxial cable or fiber optic cables connecting the remote subscriber locations to a Cable Modem Termination System or Cable Modem Terminal Server (CMTS) **110.** The CMTS **110** can provide services, such as video service, telephone service, Internet service and other user services to subscribers of the cable system via a cable modem **140** by transferring data over the cable network **130.** For example, an end user may access the IP network **100** (Internet) through the cable modem **140** from the user device **150.** It is understood by those of skill in the art that the user device **150** can be one of many devices, including a telephone, a television, or a personal computer. It is also understood that although **Figure 1** only shows one cable modem **140,** in reality an actual cable network would typically contain many more such cable modems.

The CMTS **110** manages the services provided to the respective subscribers in the cable system. For example, a first subscriber may receive television, telephone and Internet services while a second subscriber may receive only Internet service. Moreover, different subscribers may receive a different quality of service. For example, a first subscriber may receive Internet service at a relatively low bandwidth while a second subscriber may receive Internet service at relatively high bandwidth. Accordingly, the CMTS **110** transmits and receives data to and from the cable modems **140** at the rates associated with the respective subscribers. As described above, in a DOCSIS system, such rates may be established when the cable modem **140** is provisioned. The cable modems **140** may also support telephone and television services and may further support such services simultaneously with data communications such as those directed to the Internet.

It will be understood by those of skill in the art, that the data transfers between the CMTS **110** and the cable modems **140** may be performed according to standards known in the art. For example, data transfers between the CMTS **110** and the cable modems **140** may be performed using a time division multiple access (TDMA) technique wherein data is transmitted and received over the cable network 130 using channels identified as a pre-defined time slot or slots at a frequency. The upstream channel may include a plurality of such sub-channels. Standards for the transfer of data in cable systems are discussed in the Data Over Cable System Interface Specification (DOCSIS) published by Cable Television Laboratories Incorporated.

As shown in **Figure 1,** the CMTS **110** in the illustrated embodiment includes a bandwidth allocator **120** according to embodiments of the present invention. The bandwidth allocator **120** according to particular embodiments of the present invention may distribute bandwidth in the upstream channels responsive to requests for bandwidth so as to increase the likelihood that a guaranteed throughput for an end user is met. The guaranteed throughput may be associated with an end user or a connection associated with the end user. Thus, for example, embodiments of the present invention may provide an increased likelihood that a particular connection from an end user receives a guaranteed upstream throughput, all connections from a particular end user receive a guaranteed upstream throughput or certain types or classes of connections receive a guaranteed upstream throughput. Furthermore, the guaranteed throughput may vary for different connections to the same user. For example, all TCP/IP connections from an end user could receive one guaranteed throughput and all telephony connections another guaranteed throughput. Such guaranteed throughputs may even include negotiated guaranteed bandwidth connections similar to those negotiated in Asynchronous Transfer Mode (ATM) systems. Accordingly, the bandwidth allocator **120** of the present invention may increased the likelihood that a connection meets its throughput requirements however those requirements are determined.

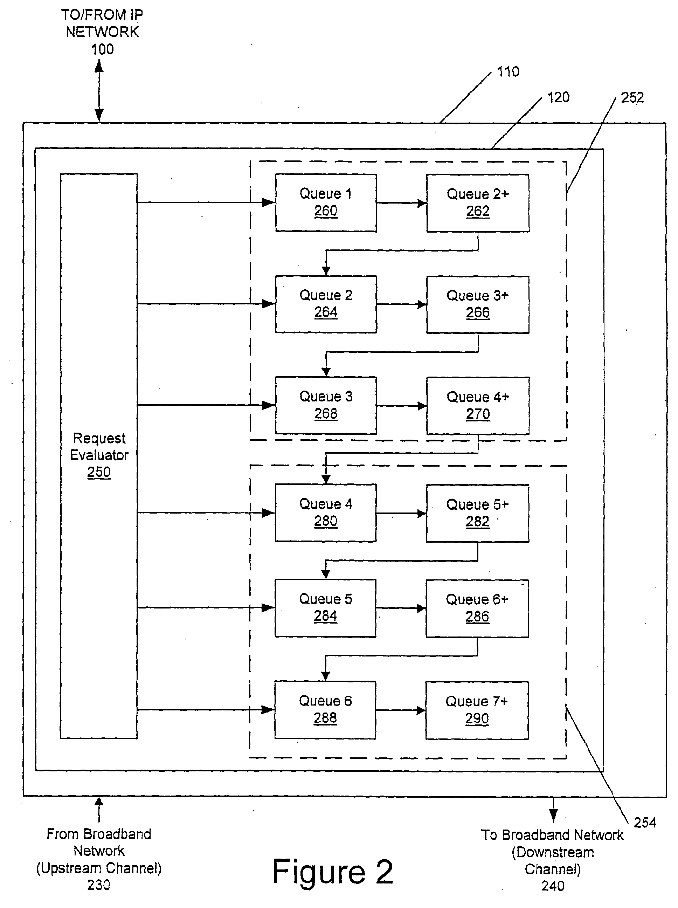

Referring now to **Figure 2,** a block diagram of the CMTS **110** including the bandwidth allocator **120** according to embodiments of the present invention will be described. As seen in **Figure 2,** the CMTS **110** may receive and provide information to an IP network **100.** The CMTS **110** may also receive information, such as requests for upstream sub-channel allocations on an upstream channel **230.** The CMTS **110** may also broadcast information, such as an allocation map, on the downstream channel **240.** The bandwidth allocator **120** of the CMTS **110** may include a request evaluator circuit **250** which evaluates requests for allocation of bandwidth of the upstream channel **230** to determine if throughput requirements for an end user associated with the request are being met. This determination may be made, for example, by tracking previously granted requests for the end user to determine if a guaranteed throughput or other service requirement of the end user has been met. For example, it may be determined if the end user has had fewer requests for bandwidth granted than would provide the guaranteed throughput while requests for bandwidth by the end user remain pending for bandwidth. As described above, such a determination may be based on an aggregate for the user or an aggregate for a type of service or may be made on a connection basis or a connection basis for a type of service. Furthermore, as described above, different throughput criteria may be utilized based on characteristics associated with the request.

As seen in **Figure 2,** the queues **260, 262, 264, 266, 268, 270, 280, 282, 284, 286, 288** and **290** which are utilized to store requests are divided into a low priority tier **252** consisting of queues **260, 262, 264, 266, 268** and **270** and a high priority tier **254** consisting of queues **280, 282, 284, 286, 288** and **290.** Based on the determination by the request evaluator circuit **250,** the request is provided to either the low priority tier **252** of queues or the high priority tier **254** of queues. As illustrated in **Figure 2,** the high priority tier **254** and the low priority tier **252** of queues may be queues in a revolving priority queue (RPQ) mechanism for allocating bandwidth. Furthermore, the tiers of queues **252** and **254** may be interconnected as illustrated in **Figure 2** or may be isolated so as to provide separate RPQ mechanisms. If the request evaluator circuit **250** determines that throughput guarantees associated with the request have been met, for example, if sufficient previous requests associated with the received request have been granted so as to meet the throughput requirements associated with the request, then the request is provided to the appropriate initial queue in the low priority tier **252** of queues. If the request evaluator circuit **250** determines that throughput guarantees associated with the request have not been met, for example, if insufficient previous requests associated with the received request have been granted so as to meet the throughput requirements associated with the request, then the request is provided to the appropriate initial queue in the high priority tier **254** of queues.

Because the embodiments illustrated in **Figure 2** utilize an RPQ mechanism, the queue within either the low priority tier **252** or the high priority tier **254** to which a request is provided may be based on a priority associated with the request. Thus, for example, requests with the lowest priority are provided either to an initial queue of queue 1 **260** for requests which meet their throughput requirements or to an initial queue of queue 4 **280** for requests which do not meet their throughput requirements. Requests with the next higher priority are provided either to an initial queue of queue 2 **264** for requests which meet their throughput requirements or to an initial queue of queue 5 **284** for requests which do not meet their throughput requirements. Requests with the highest priority are provided either to an initial queue of queue 3 **268** for requests which meet their throughput requirements or to an initial queue of queue 6 **288** for requests which do not meet their throughput requirements. The determination of priority for a request for selection of an initial queue may be made utilizing conventional techniques known to those of skill in the art.

RPO utilizes a mechanism of concatenation, promotion and readout to provide the revolving priority such that priority of a request is based both on the pnonty of the request and the time that the request has been in the queues. As seen in **Figure 2,** queue are divided into initial queues and "+" queues. The "+" queues are also referred to herein as secondary queues as requests may only be placed m these queues by promotion from an initial queue. Initial queues are queues to which a request is initially provided. The "+" queues are queues to which requests are promoted. Each level "n" of the queues has a corresponding n+1 "+" queue to which, at a promotion time, the requests from the "n" queue are promoted. Promotion refers to the operation of moving requests from one queue to another queue so as to replace the contents of the other queue. This promotion operation may be carried out, for example, by physically placing requests stored in an initial queue into a "+" queue or by logically redefining queues such that a queue previously defined as an initial queue (N) is defined as an (N-1) "+" queue.

Furthermore, as illustrated in the linked tier embodiments of **Figure 2**, all but the last "+" queue has a corresponding initial queue with which the contents of the "+" queue are concatenated at a concatenation time. Concatenation refers to the operation of combining requests from separate queues into a single queue which contains the requests of each of the previous queues. This concatenation operation may be carried out, for example, by physically placing requests stored in a "+" queue into an initial queue or by logically redefining queues such that a queue previously defined as an "+" queue is combined with a queue defined as an initial queue. If the tiers of the queues are not linked, then each tier of queues would have a final "+" queue. Thus, for example, an initial queue queue 1 **260** has an associated "+" queue queue 2+ **262** for promotion and the "+" queue queue 2+ **262** has a corresponding initial queue queue 2 **264** for concatenation. Thus pattern is repeated throughout the queue until the final queue is reached.

At a readout time, which may correspond to a bandwidth allocation period, the requests in the "+" queues are read out of the queues in descending queue order and bandwidth allocated for the read requests. If bandwidth remains, the requests in the initial queues are read out in descending queue order until all requests have been read or all bandwidth for the readout time has been allocated. The allocation of bandwidth based on the read requests may then be used to grant requests or otherwise indicate to the requesting users that the bandwidth has been allocated. For example, in the DOCSIS system, the allocation map may be generated based on the requests read from the queues. The particular mechanism for notifying a requestor that bandwidth has been allocated to a request may vary based on the system. For example, in other systems, the read requests may be used to transmit grants to end users or the like to provide notification that the request has been granted and bandwidth allocated to the request.

The queues in the different tiers be may treated independently such that both "+" and initial queues in higher priority tiers are read out before moving to lower priority tiers or the "+" queues from each tier may be read out before moving to an initial queue of any tier. In the embodiments illustrated in **Figure 2,** the "+" queues **262, 266, 270, 282, 286,** and **290** are read before moving to one of the initial queues **260, 264, 268, 280, 284** and **288.** By separating out the requests which are not meeting their guaranteed throughput requirements and providing these requests to the high priority tier **254,** these requests may be given higher priority for bandwidth allocation until such throughput requirements may be met. Thus, once the requests are given priority long enough such that the throughput requirements are met they would be provided to the low priority tier **252.**

By varying the relationship between the frequency of readout time and concatenation and promotion times, the RPQ mechanism may be made more time or priority dependent. If the promotion and concatenation time are made more frequent than the readout time, then the RPQ mechanism typically becomes more time dependent and if the concatenation and promotion times become less frequent than the readout time, then the RPQ mechanism typically becomes more priority dependent.

The present invention is described herein with reference to the cable system shown in **Figure 1** and the CMTS **110** shown in **Figure 2.** However, as will be appreciated by those of skill in the art, the present invention is applicable to any cable network configuration. Furthermore, the functions of the present invention may be implemented utilizing a data processing system operating under software control, as dedicated hardware or a combination of the two. Thus, the queues may be implemented as partitions in processing system memory, as FIFO buffer integrated circuits, as locations on a storage device such as a hard disk or other storage media or other such devices know to those of skill in the art. Additionally, while two tiers and three priority levels are illustrated in **Figure 2,** as will be appreciated by those of skill in the art, additional tiers or priority levels may be provided. Thus, for example, guaranteed throughput and connection type could also be evaluated such that telephony connections which were not receiving guaranteed throughput would all be provided to a third tier of queues which would be read out before the high priority tier **254** of **Figure 2.** Other criteria may also be utilized in dividing requests into different tiers of service.

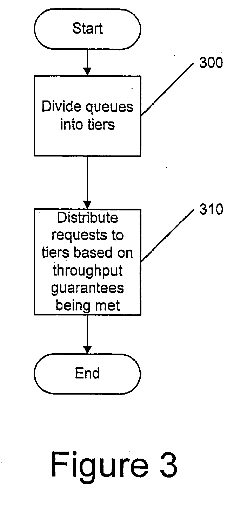

Referring now to **Figure 3,** which is a flowchart illustration of operations according to embodiments of the present invention, access to a shared communication medium utilizing a revolving priority queue (RPQ) is provided by dividing the revolving priority queue (RPQ) into at least a low priority tier having a plurality of request queues and a high priority tier having a plurality of request queues (block **300).** Requests are then directed into the initial queues in the tiers corresponding to a priority of the request based on throughput guarantees associated with the requests being met (block **310).** Thus, for example, a request may be directed to an initial queue in the high priority tier if throughput for an end user associated with the request fails to meet a guaranteed throughput.

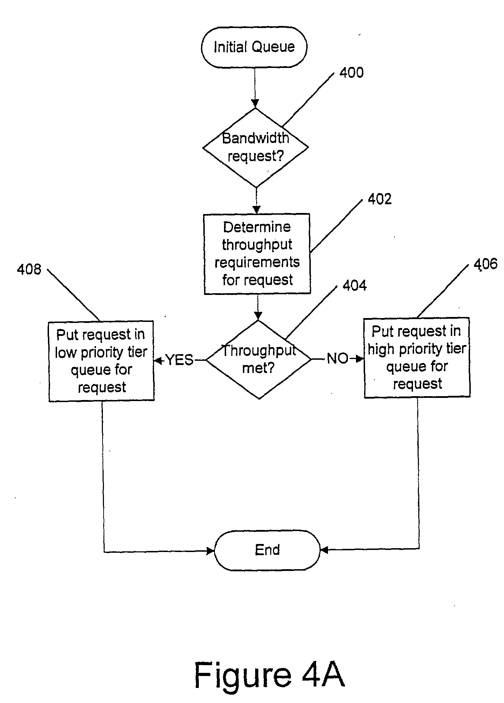

**Figures 4A** through **4D** are more detailed flowcharts illustrating operations according to particular embodiments of the present invention. As seen in **Figure 4A,** when a request for bandwidth on an upstream channel is received by the CMTS **110,** the bandwidth allocator **120** determines the throughput requirements associated with the request (block **402)** and whether those requirements are being met (block **404).** Such a determination may be made as described above with reference to **Figure 2.** If the throughput requirements are not being met (block **404),** the request is placed in an initial queue corresponding to the priority of the request in the high priority tier **254** of queues (block **406).** Thus, for example, if the request is a low priority request, then the request is placed in queue 4 **280** of **Figure 2.** If the throughput requirements are being met (block **404),** the request is placed in an initial queue corresponding to the priority of the request in the low priority tier **252** of queues (block **408).** In the present example, if the request is a low priority request, then the request is placed in queue 1 **260** of **Figure 2.**

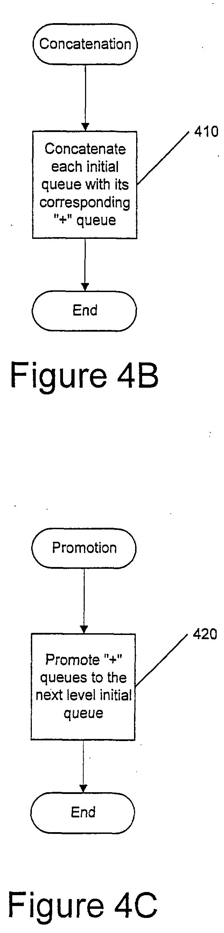

**Figure 4B** illustrates operations which may occur at a concatenation time. As seen in **Figure 4B,** each initial queue is concatenated with its corresponding "+" queue (block **410**). Thus, for example, requests which are stored in queue 2+ **262** would be concatenated with requests stored in queue 2 **264** such that queue 2 would contain both requests which were contained in queue 2 **264** and requests which were contained in queue 2+ **262** prior to the concatenation. Similar concatenation operations would be performed for each of the + queues with a corresponding initial queue. As described above, these concatenation operations may be logical or physical operations.

**Figure 4C** illustrates operations according to embodiments of the present invention which may be carried out at a promotion time. As seen in **Figure 4C,** each initial queue is promoted to the corresponding "+" queue (block **420**). Thus, for example, at a promotion time the contents of queue 2 **264** are promoted to queue 3+ **266.** After promotion, the contents of queue 3+ **266** correspond to the contents of queue 2 **264** prior to promotion. Similar promotion operations would be performed for each of the initial queues. As described above, these promotion operations may be logical or physical operations.

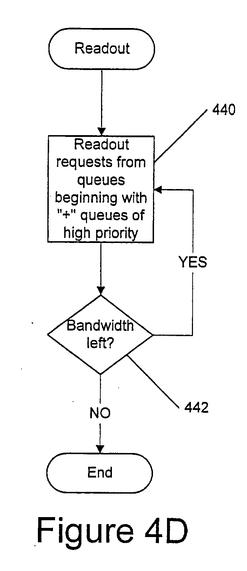

**Figure 4D** illustrates operations according to embodiments of the present invention which may be carried out at a readout time. As seen in **Figure 4D,** requests are read from the "+" queues in descending order beginning with the highest priority queue in the high priority tier **254** of queues (block **440**) which, in the present example, is queue 7+ **290.** These readout operations continue until all requests in the "+" queues have been read out or all the bandwidth for the readout time has been allocated (block **442**). If additional bandwidth is to be allocated (block **442**), reading of the queues may continue with the highest priority initial queue in the high priority tier **254** of queues and continue in descending order until no more requests remain in either tier of queues or all bandwidth has been allocated. In a DOCSIS system, the requests read from the queues may be used to generate an allocation "map" which is distributed to the cable modems **140.** Alternatively, as described above, all requests could be read from all of the high priority tier queues before requests are read from any of the low priority tier queues.

The bandwidth allocation operations illustrated in **Figures 4A** through **4D** may be implement utilizing an event driven model for bandwidth allocation, such as a timer occurrence or interrupt, by multiple processes in a parallel processing system, as serial operations or combinations thereof. For example, in a multi-tasking model, one or more of request evaluation, concatenation, promotion and readout may be separate operations carried out in parallel, for example, as separate threads in a data processing system, and may even be carried out asynchronously. Similarly, in hardware embodiments, one or more circuits may be used to carry out the request evaluation, concatenation, promotion and readout operations. Such circuits may perform the operations described in **Figures 4A** through **4D** in parallel or partially in parallel and in serial fashion.

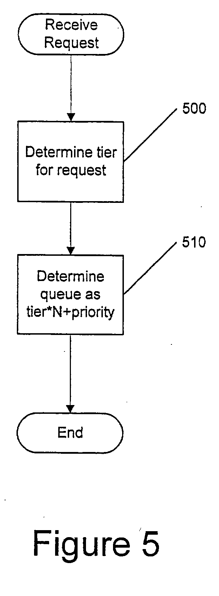

**Figure 5** illustrates operations according to embodiments of the present invention which may be carried out by a conventional RPQ which has been modified according to the teachings of the present invention. A conventional RPQ mechanism typically utilizes 2N queues where N is the number of priority levels. Such an RPQ mechanism is modified to include 2ZN queues where Z is the number of tiers which are to be evaluated. Each of the Z tiers includes 2N queues, where the N initial queues are number sequentially, 1 is the lowest priority and N is the highest priority initial queue and 0 is the lowest priority tier and Z-1 is the highest priority tier. Of the 2N queues, N are initial queues and N are secondary or "+" queues. Operations for such a Z-tier RPQ system are illustrated in **Figure 5.**

As seen in **Figure 5,** when a request is received, the tier associated with the request is determined (block **500**). This determination may be made based on the criteria described above. For example, where N is 3, Z is 2 and the criteria is whether the throughput associated with the request is being met, if the throughput is being met then the selected tier is tier 0 and, if not, the selected tier is tier 1. The request is placed in the queue corresponding to (tier*N)+priority (block **510**). Thus, for example, if a priority 2 request is received and is not meeting its guaranteed throughput, then tier 1 is selected and the request is placed in queue 1*3+2 or queue 5. If the throughput is met, tier 0 is selected and the request is placed in queue 0*3+2 or queue 2.

As will be appreciated by those of skill in the art, the embodiments illustrated in **Figure 5** may be modified in various manners depending on queue naming conventions while still benefiting from the teachings of the present invention. Accordingly, the present invention should not be construed as limited to the particular naming conventions illustrated in **Figure 5.**

The flowcharts and block diagrams of **Figures 1** through **5** illustrate the architecture, functionality, and operation of possible implementations of systems, methods and computer program products for allocating bandwidth according to various embodiments of the present invention. In this regard, each block in the flow charts or block diagrams may represent a module, segment, or portion of code, which comprises one or more executable instructions for implementing the specified logical act(s). It should also be noted that, in some alternative implementations, the acts noted in the blocks may occur out of the order noted in the figures. For example, two blocks shown in succession may, in fact, be executed substantially concurrently, or the blocks may sometimes be executed in the reverse order, depending upon the functionality involved.

Similarly, while the present invention has been described with reference to granting requests, as will be appreciated by those of skill in the art in light of the present disclose, the present invention may also be utilized to prioritize received packets for transmission. Thus, for example, received packets could be characterized and placed in a particular tier of queues implementing an RPQ mechanism based on whether the throughput for connections associated with the packets were being met. Packets would then be read from the queues in transmission order so as to allocated the transmission bandwidth so as to increase the likelihood that guaranteed throughput is being met. Accordingly, the present invention should not be construed as limited to allocating bandwidth responsive to requests but may also be utilized to allocate bandwidth for transmitted information. In such embodiments, information indicating bandwidth requirements, such as the packets themselves, may be queued rather than requests for bandwidth.

In the drawings and specification, there have been disclosed typical illustrative embodiments of the invention and, although specific terms are employed, they are used in a generic and descriptive sense only and not for purposes of limitation, the scope of the invention being set forth in the following claims.

## Claims

1. A method of controlling access to a shared communication medium, the method comprising:
dividing a revolving priority queue (RPQ) into at least a low priority tier having a plurality of request queues and a high priority tier having a plurality of request queues; and
directing a request for access to the shared communication medium into an initial queue in the high priority tier if throughput for an end user associated with the request fails to meet a guaranteed throughput.

2. The method according to Claim 1, further comprising directing the request for access to the shared communication medium into an initial queue in the low priority tier if throughput for an end user associated with the requests meets or exceeds the guaranteed throughput.

3. The method according to Claim 2, further comprising:
reading requests for access from the RPQ, where requests are read from the high priority tier before requests are read from the low priority tier of queues; and
allocating bandwidth based on the order in which requests are read from the RPQ.

4. The method according to Claim 3, wherein reading requests comprises:
reading requests from secondary queues of the high priority tier; then
reading requests from secondary queues of the low priority tier; then
reading requests from initial queues of the high priority tier; and then
reading request from initial queues of the low priority tier.

5. The method according to Claim 1, wherein directing a request into an initial queue in the high priority tier if throughput for an end user associated with the request fails to meet a guaranteed throughput, comprises:
receiving a request for access to the shared communication medium associated with a connection having a guaranteed throughput;
determining if the connection associated with the request has met its guaranteed throughput;
placing the request in the high priority tier of the RPQ if the connection associated with the request has not met its guaranteed throughput; and
placing the request in the low priority tier of the RPQ if the connection associated with the request has met its guaranteed throughput.

6. The method according to Claim 2, further comprising promoting requests in the low priority tier to a request queue in the high priority tier if, at a promotion time, the requests have not been read from a low priority tier request queue.

7. The method according to Claim 6, wherein a request associated with a connection which meets or exceeds its guaranteed throughput may be placed in a queue in the high priority tier only by promotion from a request queue in the low priority tier.

8. The method according to Claim 5, further comprising the step of placing requests which do not have an associated guaranteed throughput into a request queue in the low priority tier.

9. The method according to Claim 2, wherein the shared communication medium is a cable television system and wherein requests for access comprise requests for access to an upstream channel of the cable television system.

10. The method according to Claim 9, wherein the cable television system is a Data Over Cable (DOCSIS) compatible system.

11. The method according to Claim 10, wherein allocating bandwidth comprises:
generating a map allocating upstream bandwidth based on the read requests; and
broadcasting the map to cable modems on a downstream channel.

12. A method of allocating bandwidth for a shared communication medium, the method comprising:
dividing a revolving priority queue (RPQ) into at least a low priority tier having a plurality of queues and a high priority tier having a plurality of queues;
queuing information indicating bandwidth requirements for a connection in the high priority tier if a throughput guarantee associated with the connection is not met; and
allocating bandwidth based on an order in which the information indicating bandwidth requirements for a connection is read from the RPQ.

13. The method according to Claim 12, wherein the information indicating bandwidth requirements comprises requests for bandwidth.

14. The method according to Claim 12, wherein the information indicating bandwidth requirements comprises packets and wherein the step of allocating bandwidth comprises reading packets from the RPQ and placing the read packets in an output queue in transmission order.

15. A system for controlling access to a shared communication medium, comprising:
a bandwidth allocator circuit configured to received requests for bandwidth of the shared communication medium and to allocate bandwidth of the shared communication medium based on the received requests, the bandwidth allocator circuit further comprising:
a first tier of revolving priority queues configured to store requests for bandwidth;
a second tier of revolving priority queues configured to store requests for bandwidth; and
a request evaluator circuit configured to direct requests to one of the first tier of revolving priority queues or the second tier of revolving priority queues based on whether a throughput guarantee associated with a request is met.

16. The system according to Claim 15, wherein the first and second tier of revolving priority queues are operably coupled so that requests from the first tier of revolving priority queues are promoted to the second tier of revolving priority queues.

17. The system according to Claim 15, wherein the bandwidth allocator circuit is further configured to read requests from the second tier of revolving priority queues and allocate bandwidth based on the order in which requests are read from the second tier of revolving priority queues and then read requests from the first tier of revolving priority queues if bandwidth remains to be allocated for a bandwidth allocation period.

18. The system according to Claim 17, wherein the bandwidth allocator circuit is further configured to allocate bandwidth for requests in secondary queues of the second tier of revolving priority queues and then allocate bandwidth for requests in secondary queues of the first tier of revolving priority queues until all bandwidth for an allocation period has been allocated.

19. The system according to Claim 15, wherein N priority levels are associated with the requests and wherein the first tier of revolving priority queues comprise 2N queues and the second tier of revolving priority queues comprise 2N queues.

20. The system according to Claim 19, wherein the first tier of revolving priority queues comprises N initial queues and N secondary queues and the second tier of revolving priority queues comprises N initial queues and N secondary queues, wherein the initial queues and the secondary queues are configured to promote requests from an initial queue to a corresponding secondary queue at a promotion time and concatenate requests in a secondary queue with requests in a corresponding initial queue at a concatenation time.

21. The system according to Claim 20, wherein a secondary queue of the first tier of revolving priority queues is operably associated with an initial queue of the second tier of revolving priority queues such that requests in the secondary queue are concatenated with requests in the primary queue at the concatenation time.

22. The system according to Claim 15, wherein the shared communication medium is a cable television system and wherein requests for bandwidth comprise requests for access to an upstream channel of the cable television system.

23. The system according to Claim 22, wherein the cable television system is a Data Over Cable (DOCSIS) compatible system.

24. A system for controlling access to a shared communication medium, comprising:
means for dividing a revolving priority queue (RPQ) into at least a low priority tier having a plurality of request queues and a high priority tier having a plurality of request queues; and
means for directing a request for access to the shared communication medium into an initial queue in the high priority tier if throughput for an end user associated with the request fails to meet a guaranteed throughput.

25. A system for allocating bandwidth for a shared communication medium, comprising:
means for dividing a revolving priority queue (RPQ) into at least a low priority tier having a plurality of queues and a high priority tier having a plurality of queues;
means for queuing information indicating bandwidth requirements for a connection in the high priority tier if a throughput guarantee associated with the connection is not met; and
means for allocating bandwidth based on an order in which the information indicating bandwidth requirements for a connection is read from the RPQ.

26. A computer program product for controlling access to a shared communication medium, comprising:
a computer readable program medium having computer readable program code embodied therein, the computer readable program code comprising:
computer readable program code which divides a revolving priority queue (RPQ) into at least a low priority tier having a plurality of request queues and a high priority tier having a plurality of request queues; and
computer readable program code which directs a request for access to the shared communication medium into an initial queue in the high priority tier if throughput for an end user associated with the request fails to meet a guaranteed throughput.

27. A computer program product for allocating bandwidth for a shared communication medium, comprising:
a computer readable program medium having computer readable program code embodied therein, the computer readable program code comprising:
computer readable program code which divides a revolving priority queue (RPQ) into at least a low priority tier having a plurality of queues and a high priority tier having a plurality of queues;
computer readable program code which queues information indicating bandwidth requirements for a connection in the high priority tier if a throughput guarantee associated with the connection is not met; and
computer readable program code which allocates bandwidth based on an order in which the information indicating bandwidth requirements for a connection is read from the RPQ.
